# EUROPEAN PATENT APPLICATION

(11) **EP 3 933 746 A1**
(43) Date of publication of application: **05.01.2022**
(21) Application number: 20783973.9
(22) Date of filing: 13.03.2020
(51) Int. Cl.: G06Q 50/08

(54) **SKILL INFORMATION PRESENTATION SYSTEM AND SKILL INFORMATION PRESENTATION METHOD**

(30) Priority: 05.04.2019 JP 2019073062
(71) Applicant: KOBELCO CONSTRUCTION MACHINERY CO., LTD., Hiroshima-shi Hiroshima 731-5161 (JP)
(72) Inventor: SASAKI, Hitoshi, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: TBK
(86) International application number: PCT/JP2020/011061
(87) International publication number: WO 2020/203169

(57) **Abstract**

A skill information presentation system includes a server including: an acquisition part which acquires team skill information about a skill of a work team constituted by a plurality of operators and having performed a team work by using a plurality of remote manipulating devices; a skill information database which stores the team skill information; a skill level calculation part which calculates, based on the team skill information, a team skill level representing a level of the skill of the work team having performed the team work; a team information database which stores team information including the team skill level; and a presentation part which presents the team information to an orderer terminal.

## Description

### Technical Field

The present invention relates to a technology of presenting information about a skill of an operator who manipulates a construction machine.

### Background Art

Patent Literature 1 discloses a manipulation assistive device for a working machine as a technology of evaluating a skill of an operator who manipulates a construction machine. The manipulation assistive device calculates a work performance for evaluating a work efficiency and a skill level from a state quantity of each of a work quantity, a work time, and a fuel consumption quantity in an operation or a work using the working machine. Patent Literature 1 discloses that the operator can grasp his/her own work efficiency and skill level from the actual work performance presented to the operator (paragraph [0011] of Patent Literature 1).

Meanwhile, technologies of remotely manipulating construction machines have been developed in recent years. A remote manipulating system for remotely manipulating the construction machine is expected to allow an orderer to collect operators from all over the world. Such a remote manipulating system as to allow an orderer to place a lump order to a single work team for an operation or a work using a plurality of construction machines in place of individual orders to a plurality of operators would decrease the burden of the orderer.

However, the orderer has conventionally found it difficult to acquire useful information for evaluating a work team which may be selectable to meet the request of the orderer for the operation or work using the plurality of construction machines. Patent Literature 1 merely discloses the device which allows the operator to grasp his/her own skill level, and fails to provide the orderer with any information for evaluating a work team.

### Citation List

### Patent Literature

Patent Literature 1: Japanese Unexamined Patent Publication No. 2016-141940

### Summary of Invention

An object of the present invention is to provide a technology of providing an orderer with information for evaluating a candidate for a work team to perform an operation or a work using a plurality of construction machines.

A skill information presentation system according to one aspect of the present invention provides, as a way for achieving the object, an orderer with information about a skill of a work team constituted by a plurality of operators. The skill information presentation system includes: a server communicably connected to an orderer terminal which allows the orderer to place an order for a team work using a plurality of construction machines, and communicably connected to a plurality of remote manipulating devices for remotely manipulating the construction machines respectively. The server includes: an acquisition part which acquires team skill information about a skill of the work team constituted by the plurality of operators and having performed the team work by using the remote manipulating devices; a skill information database which stores the team skill information; a skill level calculation part which calculates, based on the team skill information, a team skill level representing a level of the skill of the work team having performed the team work; a team information database which stores team information including the team skill level; and a presentation part which presents the team information to the orderer terminal.

### Brief Description of Drawings

Fig. 1 is a block diagram showing an overall configuration of a skill information presentation system according to an embodiment of the present invention.
Fig. 2 shows an overview of a remote manipulating device included in the skill information presentation system.
Fig. 3 shows exemplary manipulation skill information stored in a manipulation skill information database in a server included in the skill information presentation system.
Fig. 4 shows an exemplary formula for calculating a manipulation skill level of an operator.
Fig. 5 shows exemplary necessary skill information stored in a necessary skill information database in the server of the skill information presentation system.
Fig. 6 shows exemplary operation schedule information stored in an operation schedule information database in the server of the skill information presentation system.
Fig. 7 shows an exemplary team information database in the server of the skill information presentation system.
Fig. 8 shows a specific exemplary rank determination table.
Fig. 9 shows exemplary team information displayed on an orderer terminal and a master device included in the skill information presentation system.
Fig. 10 shows another exemplary team information displayed on the orderer terminal and the master device of the skill information presentation system.
Fig. 11 shows a flowchart of a process of calculating a skill level in the skill information presentation system according to the embodiment.
Fig. 12 shows a flowchart of a process of sending a skill level to the orderer terminal in the skill information presentation system according to the embodiment.

### Description of Embodiments

It should be noted that the following embodiment illustrates one example of the invention, and does not delimit the technical protection scope of the present invention.

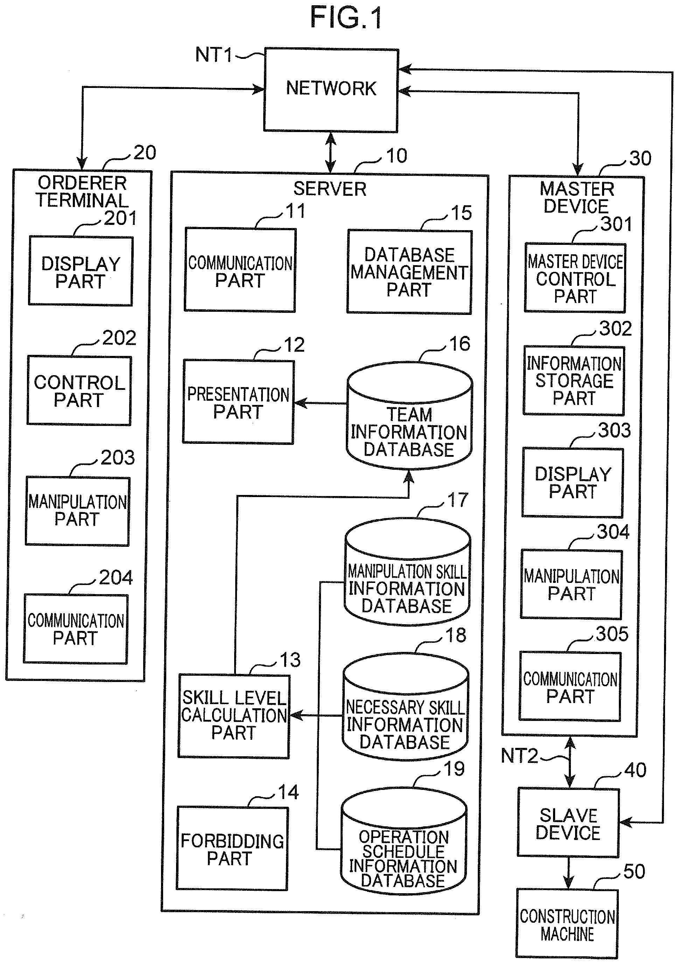

Hereinafter, a skill information presentation system and a method for presenting skill information according to the embodiment of the present invention will be described. Fig. 1 is a block diagram showing an overall configuration of the skill information presentation system according to the embodiment of the present invention. The skill information presentation system includes a server 10. The server 10 is connected to an orderer terminal 20, a master device 30, and a slave device 40 communicably with one another via a communication channel NT1. Fig. 1 shows only one master device 30, but the server 10 is communicably connected to plurality of master devices 30.

Each of the master devices 30 is an exemplary remote manipulating device for remotely manipulating a corresponding one of a plurality of construction machines 50. The server 10 is a device for presenting a skill of a work team which remotely manipulates the construction machines 50 respectively by using the master devices 30. A skill of the work team represents a skill of the work team in a team work. The team work uses the construction machines 50. In the embodiment, the team work represents an operation or a work using the construction machine 50 on a single operation site, and includes a plurality of works to be executed by the construction machines 50. The server 10 registers information about a plurality of work teams, and each of the work teams is constituted by a plurality of operators (members).

The orderer terminal 20 is a device which allows an orderer to place an order to an operator for an operation or a work to be executed by the construction machine 50 by a remote manipulation.

The slave device 40 includes a subordinate operating device arranged at an operating seat device of the construction machine 50 for handling a manipulation lever located at the operating seat device of the construction machine 50 based on a manipulative amount received by the master device 30. The slave device 40 serves as a dummy of the operator to manipulate the construction machine 50. The construction machine 50 includes a hydraulic excavator, a hydraulic crane, and the like to be remotely manipulated.

The communication channel NT1 includes a long-distance communication network formed of, for example, Internet and a mobile phone communication network. The master device 30 and the slave device 40 are communicably connected to each other via the communication channel NT2. The communication channel NT2 includes a long-distance communication network in the same manner as the communication channel NT1. Further, the communication channel NT2 may include a communication network, such as a specified low power radio, Bluetooth (registered trademark), or a wireless local area network (LAN), which enables the master device 30 and the slave device 40 to wirelessly communicate with each other at a distance of several tens to hundreds of meters therebetween. However, the communication channels merely show examples, and thus at least one of the communication channel NT1 and the communication channel NT2 may be formed of, for example, a wired communication network.

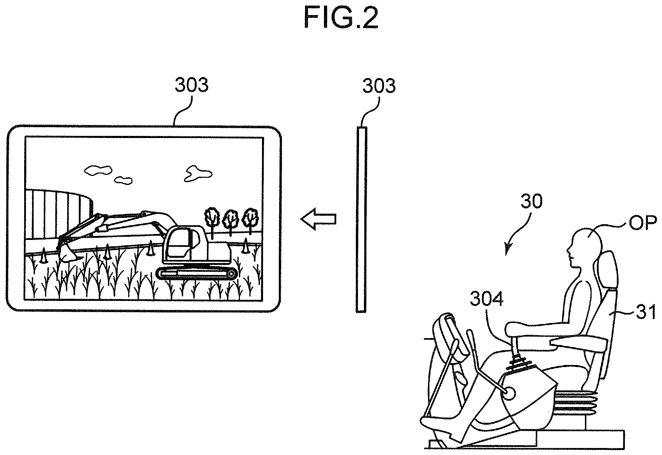

Fig. 2 shows an overview of the master device 30 included in the skill information presentation system. As shown in Figs. 1 and 2, the master device 30 includes a master device control part 301, an information storage part 302, a display part 303, a manipulation part 304, and a communication part 305.

The master device control part 301 includes, for example, a processor such as a CPU, and controls the entirety of the master device 30.

Specifically, for example, the master device control part 301 requests the operator to input an access code for allowing the operator to remotely manipulate the construction machine 50 by using the master device 30, executes an authentication process by using the input access code, and permits the operator to execute the remote manipulation when approving the authentication. Conversely, the master device control part 301 avoids permitting the operator to execute the remote manipulation when disapproving the authentication. Here, the master device 30 and the slave device 40 store their access codes in their respective memories (not shown). The master device control part 301 sends the input access code to the slave device 40 via the communication part 305 after confirming that the input access code matches the access code stored in the memory. The slave device 40 sends a permission reply to the master device 30 after confirming that the input access code matches the access code stored in the memory. The master device control part 301 establishes a communication connection between the communication part 305 and the slave device 40 when the communication part 305 receives the permission reply. Thereafter, the master device control part 301 sends, to the slave device 40 via the communication part 305, the manipulative amount input to the manipulation part 304 by the operator at every time of the input to thereby move the slave device 40. This enables the operator to perform a work of the construction machine 50 by manipulating the manipulation part 304 of the master device 30. The access code may be, for example, an operator ID to be described later, or a password set independently of the operator ID.

The master device control part 301 acquires manipulation skill information of the operator and causes the information storage part 302 to store the acquired manipulation skill information in the work of the construction machine 50 by the remote manipulation. The manipulation skill information is information about a manipulation skill of the operator having remotely manipulated the construction machine 50 by using the master device 30. The master device control part 301 acquires a part of or whole of necessary skill information of the operator, and causes the information storage part 302 to store the acquired necessary information in the work of the construction machine 50 by the remote manipulation. The necessary skill information is information about a necessary skill of the operator other than the manipulation skill and necessary for the work of the construction machine 50. The manipulation skill information and the necessary skill information will be described in detail.

The master device control part 301 sends the manipulation skill information and the necessary skill information to the server 10 via the communication part 305 after the finish of the work of the construction machine 50. Moreover, a part of or whole of the necessary skill information may be sent from the orderer terminal 20 to the server 10 in accordance with a content of the necessary skill information.

The display part 303 includes a display device, such as a liquid crystal display, and displays a peripheral image of the construction machine 50. As shown in Fig. 2, the master device 30 further includes a seat 31 for allowing the operator to sit thereon, and the display part 303 is arranged in front of the seat 31.

The manipulation part 304 is a device for receiving a manipulation of the operator. The manipulation part 304 includes a manipulation lever similar to that provided at the operating seat device of the construction machine 50. Specifically, the manipulation part 304 includes a plurality of manipulation levers each tiltable in a front-rear direction and/or a left-right direction. When the operator tilts a certain manipulation lever, a manipulative amount corresponding to an amount the tilting is sent to the slave device 40 via the communication channel NT2 to thereby cause the slave device 40 to tilt the manipulation lever of the construction machine 50 corresponding to the manipulation lever tilted by the operator in accordance with the manipulative amount. As a result, the operator can remotely manipulate the construction machine 50 by handling the manipulation lever of the manipulation part 304 while seeing the peripheral image displayed on the display part 303.

The communication part 305 includes a communicator connecting the master device 30, and the communication channel NT1 and the communication channel NT2 to each other.

The server 10 is constituted by a computer including a processor, such as a CPU, and a communication function. As shown in Fig. 1, the server 10 includes a communication part 11 (exemplary acquisition part), a presentation part 12, a skill level calculation part 13, a forbidding part 14, a database management part 15, and databases. In the embodiment, the databases include a team information database 16, a manipulation skill information database 17, a necessary skill information database 18, and an operation schedule information database 19. Each of the manipulation skill information database 17 and the necessary skill information database 18 represents an exemplary skill information database of the present invention. Data in the various databases shown in Fig. 1 is stored in the memory included in the server 10. Moreover, in Fig. 1, each of the presentation part 12, the skill level calculation part 13, the forbidding part 14, and the database management part 15 comes into effect when the CPU executes a corresponding program stored in the memory.

The communication part 11 includes, for example, a communicator which connects the server 10 and the communication channel NT1 to each other, and receives master device information sent from the master device 30. The master device information includes the manipulation skill information and a part of or whole of the necessary skill information. Besides, the communication part 11 receives orderer information from the orderer terminal 20. The orderer information includes: operation schedule information sent from the orderer terminal 20 and including information about the team work; a query request for inquiring a skill level including a manipulation skill level and a necessary skill level of a specific operator from the orderer terminal 20; and a part of or whole of the necessary skill information.

The presentation part 12 presents team information including the skill level to the orderer terminal 20. Specifically, when the communication part 11 receives the query request from the orderer terminal 20, the presentation part 12 reads out the skill level of the corresponding work team from the team information database 16 and sends the read skill level to the orderer terminal 20 via the communication part 11. When the skill level calculation part 13 to be described later calculates the skill level of the work team, the presentation part 12 further sends the calculated skill level to the master device 30 via the communication part 11.

The skill level calculation part 13 calculates, based on the manipulation skill information, a manipulation skill level representing a level of the manipulation skill of the work team, and calculates, based on the necessary skill information, a necessary skill level representing a level of the necessary skill of the work team. The calculation of each skill level will be described in detail later.

When the communication part 11 receives the master device information from the master device 30, the database management part 15 causes one of the manipulation skill information database 17 and the necessary skill information database 18 to store the master device information. Specifically, when the received master device information indicates the manipulation skill information, the database management part 15 causes the manipulation skill information database 17 to store the manipulation skill information. When the received master device information indicates the necessary skill information, the database management part 15 causes the necessary skill information database 18 to store the necessary skill information. Furthermore, when the communication part 11 receives the operation schedule information from the orderer terminal 20, the database management part 15 causes the operation schedule information database 19 to store the operation schedule information. When the communication part 11 receives the necessary skill information from the orderer terminal 20, the database management part 15 causes the necessary skill information database 18 to store the necessary skill information.

The manipulation skill information database 17 stores respective manipulation skill information of the work teams entered in the server 10. Specifically, the manipulation skill information database 17 is made to associate each of the work teams and the corresponding manipulation skill information of the work team with each other and store the manipulation skill information of the work team as a history. When a specific work team has actual work performances for a plurality of team works, the manipulation skill information database 17 stores a plurality of pieces of manipulation skill information corresponding to the team works for the work team. The manipulation skill information includes information about an actual work performance representing an actual performance of the work team having performed the team work by the remote manipulation.

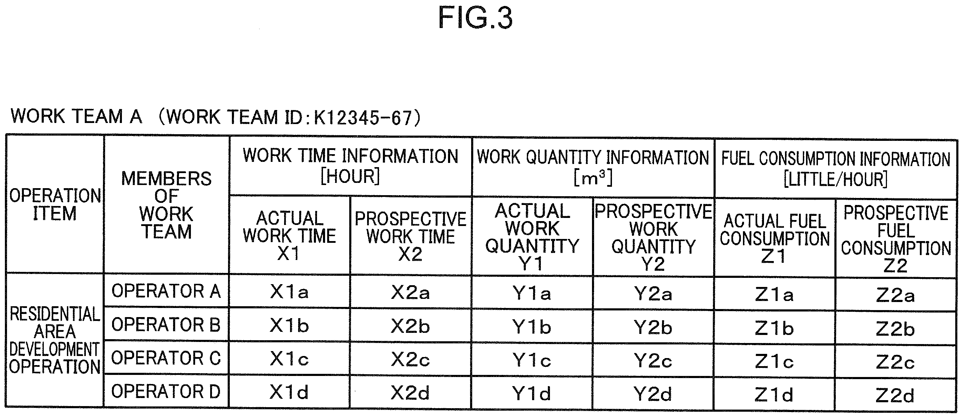

Fig. 3 shows exemplary information about the actual work performance included in the manipulation skill information stored in the manipulation skill information database 17. In the specific example shown in Fig. 3, the information about the actual work performance stored in the manipulation skill information database 17 includes a work team ID, work team members, an operation item, work time information, work quantity information, and fuel consumption information. The manipulation skill information shown in Fig. 3 is stored for each team work.

The work team ID represents identification information for uniquely identifying each of the work teams entered in the server 10.

Here, the work team members represent a plurality of operators constituting the work team. The specific example shown in Fig. 3 includes four operators A, B, C, and D.

Examples of the operation item include "residential area development operation", "river area improvement operation", and "side-ditch operation". The specific example shown in Fig. 3 includes the operation item of the residential area development operation. However, the operation items listed above are mere examples, and the team work may adopt other operation item. Each of the relevant operations includes various works represented by work items of, for example, excavation and loading, flat ground preparation, flat ground forming, slope preparation, and slope forming. The work item of excavation and loading represents a work of excavating soil, ground, bedrock, and the like, and loading the excavated ones onto a dump truck. The work item of flat ground forming represents a work of forming the flat ground by removing unevenness of the ground. The work item of flat ground preparation represents a work of preparing the flat ground by way of the flat ground forming. The work item of slope forming represents a work of forming the slope which is artificially made by removing the soil from the ground or adding the soil to the ground. The work item of slope preparation represents a work of preparing the slope formed by way of the slope forming. However, the work items listed above are mere examples, and the work of the construction machine 50 may include other work items.

The work time information includes an actual work time and a prospective work time of each of the operators constituting the work team.

The actual work time is a time in which the work of the construction machine 50 has been actually performed by each of the operators of the work team by the remote manipulation. The actual work time represents a time period from a start to a finish of the work of the construction machine 50 assigned to the operator. In this respect, when the work of the construction machine 50 assigned to the operator needs a plurality of days, the relevant actual work time indicates a total value (cumulative value) of the work time over the days.

For instance, the master device control part 301 of the master device 30 acquires the start and the finish of the work assigned to the operator, and can calculate, based on the acquired start and finish, the actual work time. The master device control part 301 causes the information storage part 302 to store the calculated actual work time. The master device control part 301 can determine each of the start and the finish in response to, for example, an input (e.g., switching action) of the operator received by an unillustrated input part of the master device 30. The master device control part 301 may cause the information storage part 302 to store, as the actual work time, a time input by the operator via the input part after the finish of the work.

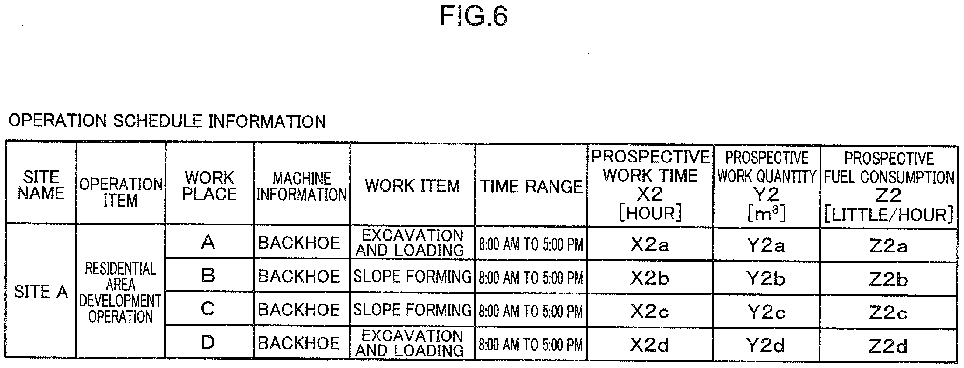

The prospective work time is set for each of the works assigned to each of the operators in the work team. The prospective work time represents a time period estimated to be necessary to complete the work assigned to the operator. The prospective work time is predetermined by the orderer and included in the operation schedule information sent from the orderer terminal 20 to the server 10 (see Fig. 6 to be described later) before the operator executes the remote manipulation.

The actual work quantity represents a work quantity actually made in the work of the construction machine 50 by the remote manipulation of each of the operators in the work team. When the work of the construction machine 50 indicates, for example, the item "excavation and loading", the actual work quantity may represent a total quantity (cumulative quantity) of the soil of the ground excavated from the start to the finish of the work. In this case, for example, the master device control part 301 can acquire the actual work quantity by calculating, based on a load detected by an unillustrated detection sensor provided in a working device of the construction machine 50, a soil quantity loaded to a bucket of the construction machine 50 per loading to the bucket, and calculating a total soil quantity from the start to the finish of the work.

The actual work quantity may represent, for example, a total quantity (cumulative quantity) of the soil obtained by excavating the ground and loading the soil from the excavated ground to the dump truck during the time period from the start to the finish of the work. In this case, for example, the master device control part 301 can acquire the actual work quantity by acquiring, based on a load detected by an unillustrated detection sensor provided in the dump truck, a soil quantity loaded to the dump truck per truck and calculating a total soil quantity obtained during the time period from the start to the finish of the work.

The master device control part 301 may cause the information storage part 302 to store, as the actual work quantity, a work quantity input by the operator via the input part after the finish of the work.

The prospective work quantity is set for each of the works assigned to each of the operators in the work team. The prospective work quantity represents a work quantity estimated to be necessary to complete the work by the operator. The prospective work quantity is predetermined by the orderer and included in the operation schedule information sent from the orderer terminal 20 to the server 10 before the operator executes the remote manipulation.

The actual fuel consumption represents a fuel consumption actually made in the work of the construction machine 50 by the remote manipulation by each of the operators in the work team. For instance, the master device control part 301 can calculate, based on a driving time and a fuel consumption quantity of the construction machine 50, an actual fuel consumption. The driving time may adopt, for example, a value equal to the value of the actual work time, or only a section of the actual work time in which the engine of the construction machine 50 is driven. For instance, the master device control part 301 can acquire the fuel consumption quantity of the fuel consumed during the time period from the start to the finish of the work in response to a signal output from a fuel residual quantity sensor provided in a fuel tank of the construction machine 50.

The prospective fuel consumption is set for each of the works assigned to each of the operators in the work team. The prospective fuel consumption represents a fuel consumption estimated to be necessary in the work assigned to each of the operators. The prospective fuel consumption is predetermined by the orderer and included in the operation schedule information sent from the orderer terminal 20 to the server 10 before the operator executes the remote manipulation.

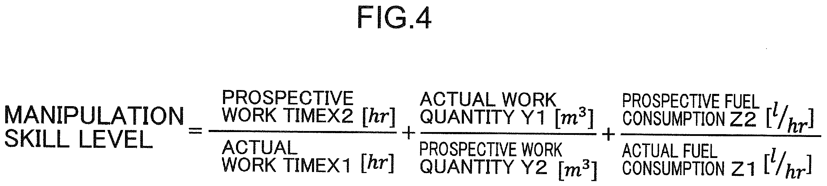

Fig. 4 show an exemplary formula for calculating the manipulation skill level of the operator. In the specific example shown in Fig. 4, the manipulation skill level of the operator is calculated by using a formula including a term concerning the work time, a term concerning the work quantity (soil quantity), and a term concerning the fuel consumption. As clearly seen from the formula shown in Fig. 4, the value of the manipulation skill level of the operator indicates "3" when the actual work time equals to the prospective work time, the actual work quantity (actual soil quantity) equals to the prospective work quantity (prospective soil quantity), and the actual fuel consumption equals to the prospective fuel consumption. In other words, the operator having actually completed the work as estimated has the manipulation skill level at the value of "3". It is seen from this perspective that the manipulation skill of the operator is higher than a standard when the value of the calculated manipulation skill level is greater than "3", and that the manipulation skill of the operator is lower than the standard when the value is smaller than "3". In the embodiment, the maximum value of the manipulation skill level of the operator is set to "5". Specifically, when the value of the manipulation skill level of the operator calculated by using the formula shown in Fig. 4 is 5 or more, the skill level calculation part 13 sets the manipulation skill level of the operator to "5".

The skill level calculation part 13 calculates, based on the manipulation skill information shown in Fig. 3, the manipulation skill level of each of the operators A to D by using the formula shown in Fig. 4. In the embodiment, a work team A has a manipulation skill level representing, for example, an average value of the manipulation skill levels of the operators A to D. The skill level calculation part 13 calculates the average value of the manipulation skill levels of the operators A to D. The database management part 15 causes the team information database 16 to store the calculated average value as the manipulation skill level of the work team A. The aforementioned way of calculating the manipulation skill level is a mere example, and thus the manipulation skill level may be calculated by another way.

The necessary skill information database 18 stores respective necessary skill information of the work teams entered in the server 10. Specifically, the necessary skill information database 18 is made to associate each of the work teams and the corresponding necessary skill information of the work team with each other, and store the necessary skill information of the work team as a history. When a specific work team has actual work performances for a plurality of team works, the necessary skill information database 18 stores a plurality of pieces of necessary skill information corresponding to the team works for the work team.

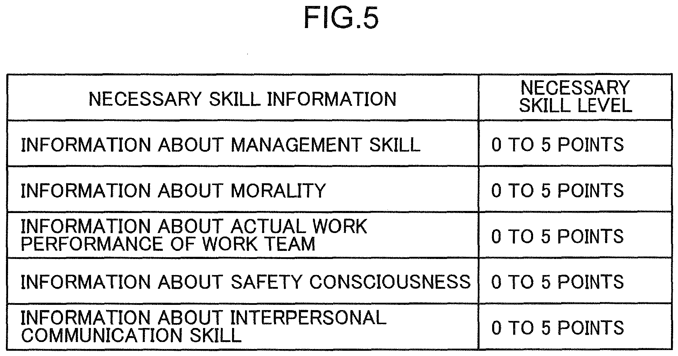

Fig. 5 shows specific exemplary necessary skill information stored in the necessary skill information database 18 in the server of the skill information presentation system. In the specific example shown in Fig. 5, the necessary skill information includes information about a management skill, information about morality, information about the actual work performance of the work team, information about safety consciousness, and information about an interpersonal communication skill. In the embodiment, the necessary skill information includes the aforementioned five pieces of skill information.

As shown in Fig. 5, the skill level calculation part 13 calculates, based on the five pieces of skill information, corresponding skill levels. In the embodiment, each of the skill levels is set to the range of 0 to 5 points.

The management skill is a skill required to perform at least one of administration and planning of the team work. The orderer can determine, based on a level of the management skill of the work team presented to the orderer terminal 20, whether the work team can perform at least one of the administration and planning of the team work.

The information about the management skill includes, for example, information about a skill of planning an operation schedule for an entire operation, information about a skill of deciding arrangements of the work team, and information about a skill of administrating a progress of a work assigned to each of the operators constituting the work team in the team work.

When the orderer supervises the team work, the orderer makes a score for the management skill of the work team in the team work after the completion of the team work. The information about the management skill is sent as a score result from the orderer terminal 20 to the server 10. The sent score result concerning the management skill of the work team is stored as the necessary skill information in the necessary skill information database 18. The skill level calculation part 13 stores a table having a relation between the score result and the level of the management skill associated with each other, and calculates (generates) a level of the management skill of the work team with reference to the table. The calculated level of the management skill of the work team is stored in the team information database 16.

In the specific example, the information about the management skill indicates the score result concerning the management skill of the work team, but should not be limited thereto. The information about the management skill may indicate a score result concerning the management skill of each of the operators constituting the work team. In this case, the level of the management skill of the work team is calculated, for example, in the following manner.

Specifically, the orderer makes a score for the management skill of each of the operators constituting the work team in the team work after the completion of the team work. The information about the management skill is sent as a score result from the orderer terminal 20 to the server 10. The sent score result concerning the management skill of each of the operators is stored as the necessary skill information in the necessary skill information database 18. The skill level calculation part 13 stores a table having a relation between the score result and the level of the management skill associated with each other, and calculates (generates) a level of the management skill of each of the operators with reference to the table. The calculated level of the management skill is stored in the team information database 16. The skill level calculation part 13 calculates an average value of the calculated levels of the management skills of the operators. The database management part 15 causes the team information database 16 to store the calculated average value as the level of the management skill of the work team A. The database management part 15 may cause the team information database 16 to store, as the level of the management skill of the work team A, a greatest value among the values of the levels of the management skills of the operators.

Next, the information about the morality will be described. The morality is necessary for the team work. The orderer can determine, based on a level of the morality of the work team presented to the orderer terminal 20, whether the work team has a skill of considering other operator.

The information about the morality includes, for example, information as to whether the work team executes a preliminarily forbidden action in the team work, information as to whether the work team starts the work at a predetermined start time for the work, and information as to whether the work team has canceled the work without any notification.

When the orderer supervises the team work, the orderer makes a score for the morality of the work team in the team work after the completion of the team work. The information about the morality is sent as a score result from the orderer terminal 20 to the server 10. The sent score result concerning the morality of the work team is stored as the necessary skill information in the necessary skill information database 18. The skill level calculation part 13 stores a table having a relation between the score result and the level of the morality associated with each other, and calculates (generates) a level of the morality of the work team with reference to the table. The calculated level of the morality of the work team is stored in the team information database 16.

Next, actual team work performance information representing information about the actual team work performance of the work team will be described. The actual team work performance information includes information about the actual work performance described above and shown in Fig. 3. The orderer can determine, based on the level of the actual work performance of the work team presented to the orderer terminal 20, whether the work team has a skill of appropriately coping with a situation on the operation site of the team work ordered by the orderer.

The necessary skill information database 18 stores information about one or more actual work performances of each of the work teams as sent from the master device 30. When the necessary skill information database 18 stores information about a plurality of actual work performances corresponding to a plurality of team works performed by the work team A, the skill level calculation part 13 calculates, based on the information about the actual work performances of the work team A, a level of each of the actual work performances of the work team A, for example, in the following manner.

In the embodiment, the skill level calculation part 13 calculates, based on the information about the actual work performances, a sum work time, the sum number of operation sites, a total work time for each of the operation items, and a total number of operation sites for each of the operation items. The skill level calculation part 13 further calculates the level of each of the actual work performances of the work team, based on at least one of the calculated sum work time, sum number of operation sites, total work time for each of the operation items, and total number of operation sites for each of the operation items. Hereinafter, more details will be described.

The skill level calculation part 13 calculates, based on the information about the actual work performances, the sum work time representing a sum total value of work times of the team works performed by the work team A. The sum work time represents a value obtained by summing up all the work times of the team works performed by the work team A. For instance, the work time for each of the team works may represent a time period from a start to a finish of the team work, or a total of the actual work times of each of the operators in each of the team works.

The skill level calculation part 13 calculates, based on the information about the actual work performances, the sum number of operation sites representing the number of team works performed by the work team A.

Besides, the skill level calculation part 13 calculates, based on the information about the actual work performances, a total work time for each of the operation items. Specifically, when the work team A has actual work performances of a plurality of team works concerning the residential area development operation and the river area improvement operation, the skill level calculation part 13 calculates a total work time representing a total value of work times for the team works concerning the residential area development operation. The skill level calculation part 13 further calculates a total work time representing a total value of work times for the team works concerning the river area improvement operation.

Furthermore, the skill level calculation part 13 calculates, based on the information about the actual work performances, a total number of operation sites for each of the operation items. Specifically, the skill level calculation part 13 calculates the total number of operation sites representing the number of team works concerning the residential area development operation performed by the work team A, and calculates the total number of operation sites representing the number of team works concerning the river area improvement operation performed by the work team A.

The skill level calculation part 13 stores a table having a relation in which at least one of the sum work time, the sum number of operation sites, the total work time for each of the operation items, and the total number of operation sites for each of the operation items is associated with the level of the corresponding actual work performance in advance. The skill level calculation part 13 calculates (generates) a level of the actual work performance of the work team with reference to the table. The calculated level of the actual work performance is stored in the team information database 16.

Next, the information about the safety consciousness will be described. The information about the safety consciousness is information necessary for the team work. The orderer can determine, based on the information about the safety consciousness of the work team presented to the orderer terminal 20, whether the work team has a skill of considering other operator.

The information about the safety consciousness includes, for example, information about the number of activations of a safety device (safety function) included in each of the construction machines 50 in the team work, information about the frequency of distracted driving of each operator in the team work, and information about the frequency of drowsy driving of each operator in the team work.

The number of activations of the safety device (safety function) is detected by an unillustrated sensor provided in the master device 30, and the information about the safety consciousness is sent as the detected number from the master device 30 to the server 10. The sent detected number is stored as the necessary skill information in the necessary skill information database 18.

Regarding the distracted driving and the drowsy driving of the operator, the frequency of the distracted driving of the operator is detectable from taken image information about an image of the operator taken by an unillustrated image taking part provided in the master device 30, and the frequency of the drowsy driving of the operator is also detectable from the taken image information. The information about the safety consciousness is sent as a detected frequency from the master device 30 to the server 10. The sent detected frequency is stored as the necessary skill information in the necessary skill information database 18.

The skill level calculation part 13 stores a table having a relation between the detected number or frequency and the level of the safety consciousness associated with each other, and calculates (generates) a level of the safety consciousness of the work team with reference to the table. The calculated level of the safety consciousness is stored in the team information database 16.

Additionally, the information about the interpersonal communication skill will be described. The information about the interpersonal communication skill includes information about an interpersonal communication skill required for the operators constituting the work team to cooperate with each other in the team work. The orderer can determine, based on the level of the interpersonal communication skill of the work team presented to the orderer terminal 20, whether the work team has a skill of considering other operator, and whether the operators constituting the work team can cooperate with each other in the team work.

The information about the interpersonal communication skill includes, for example, information about the number of talks and a time for the talks in connection with tasks in the team work, information about the number of languages available in such talks, and information about an actual usage performance of each of the languages available in the talks.

When the orderer supervises the team work, the orderer makes a score for the interpersonal communication skill of the work team after the completion of the team work. The information about the interpersonal communication skill is sent as a score result from the orderer terminal 20 to the server 10. The sent score result concerning the interpersonal communication skill of the work team is stored as the necessary skill information in the necessary skill information database 18.

The skill level calculation part 13 stores a table having a relation between the score result and the level of the interpersonal communication skill associated with each other, and calculates (generates) a level of the interpersonal communication skill of the work team with reference to the table. The calculated level of the interpersonal communication skill of the work team is stored in the team information database 16.

The operation schedule information database 19 stores the operation schedule information sent from the orderer terminal 20. Fig. 6 shows specific exemplary operation schedule information (employment information) stored in the operation schedule information database 19.

As shown in Fig. 6, the operation schedule information includes a site name for the team work, an operation item for the team work, a work place, a plurality of pieces of machine model information for use in the team work, a plurality of work items displayed in such a way as to correspond to the respective pieces of machine model information, a time range, a prospective work time, a prospective work quantity, and a prospective fuel consumption.

Examples of the operation item include the residential area development operation, the river area improvement operation, and the side-ditch operation as described above. The specific example shown in Fig. 6 includes the operation item of the residential area development operation.

The work place represents a region where a specific work is expected to be performed on the operation site of the team work. In the specific example shown in Fig. 6, four work places A to D are designated on the operation site.

The machine model information includes information about a type of the construction machine 50 expected for use in each of the work places A to D in the team work. The machine model information may include other information, e.g., a model of the construction machine 50, a working device type, and a leading end attachment type, in addition to the type of the construction machine 50.

Examples of the work item include, for example, the above-listed excavation and loading, flat ground preparation, flat ground forming, slope preparation, and slope forming. The specific example shown in Fig. 6 includes the work items of the excavation and loading, and the slope forming.

The prospective work time represents a time estimated to be necessary to complete the work of each of the work items in the team work shown in Fig. 6. The prospective work time is predetermined by the orderer before the work team executes the remote manipulation. In the specific example shown in Fig. 6, the prospective work time is set to 8 hours (from 8:00 am to 5:00 pm, including 1 hour break).

The prospective work quantity represents a work quantity estimated to be necessary to complete the work of each of the work items. The prospective work quantity is predetermined by the orderer before the work team executes the remote manipulation.

The prospective fuel consumption represents a fuel consumption estimated to be necessary to complete the work of each of the work items. The prospective fuel consumption is predetermined by the orderer before the work team executes the remote manipulation. For instance, the orderer determines the prospective fuel consumption in accordance with the machine type for use in each work, the work item, and setting of a driving mode. Examples of the driving mode includes three modes of "H mode", "S mode", and "ECO mode". The H mode represents a mode selectable by the operator when the operator puts an emphasis on the work quantity. The fuel consumption (little/hour, i.e., L/hr) in the H mode is larger than the fuel consumption (L/hr) in the S mode, that is, the fuel consumption deteriorates in the H mode. The S mode represents a mode selectable by the operator when the operator puts an emphasis on a balance between the work quantity and the fuel consumption. The ECO mode represents a mode selectable by the operator when the operator puts an emphasis on the fuel consumption under a small work load. The fuel consumption (L/hr) in the ECO mode is smaller than the fuel consumption (L/hr) in the S mode, that is, the fuel consumption improves in the ECO mode.

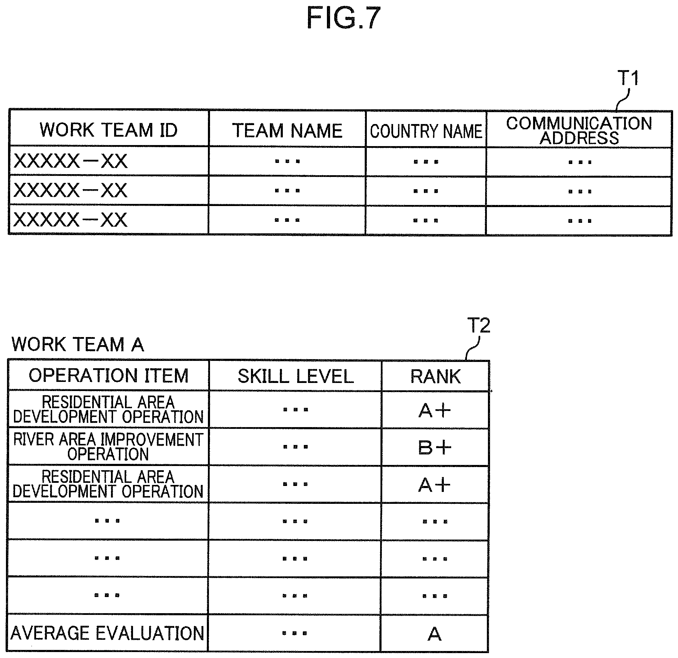

Fig. 7 show an example of the team information database 16. The team information database 16 includes a work team table T1 and a skill level table T2. The work team table T1 registers the information of the work teams entered in the server 10 in advance. The skill level table T2 registers the skill level of each of the work teams per item. Although the skill level table T2 shows the skill level of the work team A per site name in the specific example shown in Fig. 7, the item should not be limited thereto. For instance, the item may be other item, such as the operation item.

Specifically, the work team table T1 includes columns "WORK TEAM ID", "COUNTRY", and "COMMUNICATION ADDRESS". The column "WORK TEAM ID" represents an identifier for uniquely identifying each of the entered work teams. The column "TEAM NAME" represents the name of the work team. The column "COUNTRY" represents a country, such as Japan and Germany, where the work team is registered. The column "COMMUNICATION ADDRESS" represents a communication address of the master device 30 to be used by the work team.

The skill level table T2 includes a database created for each of the entered work teams concerning each of the operation items. The specific example shown in Fig. 7 includes a database of the work team A. The database shows skill levels and ranks thereof for the operation items, and further shows an average value of the skill levels, and an average rank.

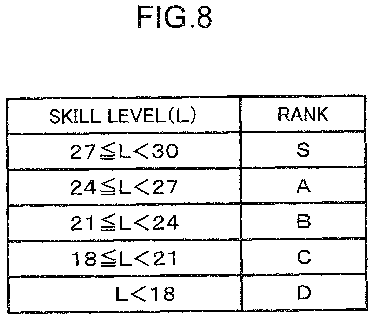

Fig. 8 shows a specific exemplary rank determination table. The skill level calculation part 13 determines, based on a total value L of the skill levels, the rank of the corresponding skill level of the work team as, for example, "A" with reference to the rank determination table shown in Fig. 8, and the determined rank "A" of the skill level is stored in the team information database 16. The rank determination table shown in Fig. 8 is stored in the memory of the server 10 in advance, and includes columns of "SKILL LEVEL" and "RANK".

In the embodiment, the total value L of the skill levels represents a total value of the manipulation skill level and the necessary skill level. The necessary skill level has a total value of the level of the management skill, the level of the morality, the level of the actual work performance of the work team, the level of the safety consciousness, and the level of the communication skill. Each of the six skill levels falls within the range of 0 to 5 points. Accordingly, the total value L of the skill levels falls within the range of 0 to 30 points.

In the specific example shown in Fig. 8, the five ranks of the skill levels are determined in descending order of S, A, B, C, and D. Therefore, the rank determination table registers ranks S to D in this order in the column "RANK". The column "SKILL LEVEL" has registration of a range of values of the corresponding skill level for each of the ranks S to D. In the embodiment, each of the ranks is further classified even without illustration in Fig. 8. Specifically, the rank A is, for example, further classified into three divisional ranks "A+", "A", "A-", and a range of values of the corresponding skill level for each of the ranks is registered.

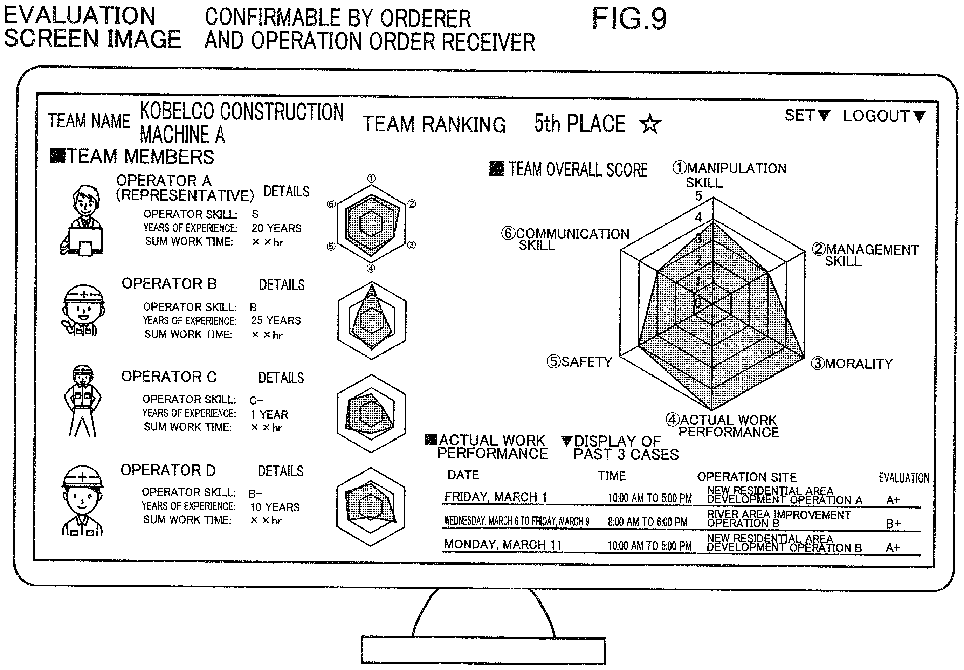

Fig. 9 shows exemplary team information displayed on the orderer terminal 20 and the master device 30 of the skill information presentation system.

The team information shown in Fig. 9 includes a team name of a specific work team, member information (personal information of each operator), information about skill level information of the work team, and information about an actual work performance of the work team.

The member information includes information about the operators A to D constituting the work team. The member information includes a skill level of each of the operators, a rank of the skill level of the operator, years of experience as the operator, and a sum work time for works performed by the operator. The skill level of the operator includes a manipulation skill level and a necessary skill level in the same manner as the skill level of the work team described above. The necessary skill level includes a level of a management skill, a level of morality, a level of the actual work performance of the work team, a level of safety consciousness, and a level of a communication skill. The six skill levels are displayed in the form of a radar chart visibly for the orderer and the orderer. The rank of the skill level of each of the operators is determined with reference to the rank determination table shown in Fig. 8 in the same manner as the rank of the skill level of the work team.

The skill level of the operator included in the team information shown in Fig. 9 represents an average value of a plurality of skill levels (personal skill levels) of the operators calculated for a plurality of team works, respectively, performed by the work team in past, and stored as a history in the team information database 16. The rank of the skill level of each of the operators included in the team information shown in Fig. 9 indicates a rank determined with reference to the rank determination table shown in Fig. 8 with respect to the average value of the skill levels of the operator.

The skill level information of the work team represents information about a team skill level of the work team. The skill level of the work team includes a manipulation skill level and a necessary skill level. The necessary skill level includes a level of a management skill, a level of morality, a level of the actual work performance of the work team, a level of safety consciousness, and a level of a communication skill. The six skill levels are displayed in the form of a radar chart visibly for the orderer and the operator.

The skill level of the work team included in the team information shown in Fig. 9 indicates an average value of a plurality of team skill levels of the work team calculated for each of the team works performed by the work team in past and stored as a history in the team information database 16.

The information about the actual work performance of the work team includes a date on which a team work has been performed, a time range in which the team work has been performed, an operation item on an operation site where the team work has been performed, and a rank of the skill level for the operation item. The presentation part 12 generates the information about the actual work performance of the work team, based on the operation schedule information stored in the operation schedule information database 19 shown in Fig. 6, the team information of the work team stored in the team information database 16 shown in Fig. 7, the manipulation skill information stored in the manipulation skill information database 17, and the necessary skill information stored in the necessary skill information database 18.

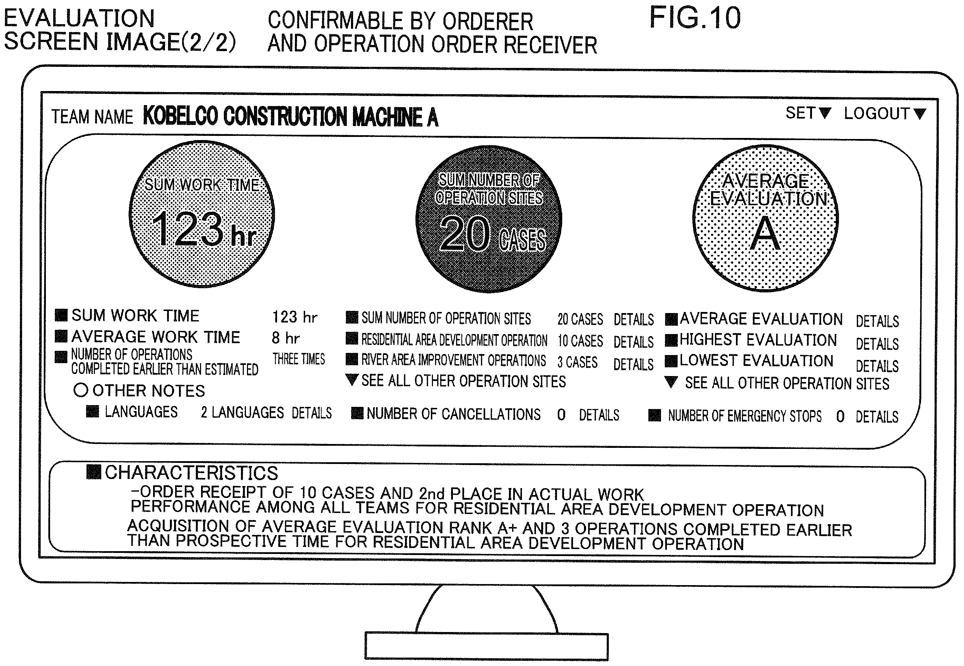

Fig. 10 shows another exemplary team information displayed on the orderer terminal 20 and the master device 30 of the skill information presentation system.

The team information shown in Fig. 10 includes a team name of a specific work team, an actual work performance of a team work performed by the work team, information about necessary skill information of the work team, and characteristics of the work team.

The actual work performance of the team work includes information about a sum work time, information about the sum number of operation sites, and information about a rank of the skill level of the work team. The information about the sum work time includes: the sum work time; an average work time obtained by summing up work times of each of a plurality of team works and dividing the work times by the number of team works; and the number of team works completed earlier than estimated among the team works. The information about the sum number of operation sites includes the sum number of operation sites, and the number of operation sites for each of operation items. The information about the rank of the skill level of the work team includes an average evaluation rank of skill levels of the work team, and a rank of the highest evaluation and a rank of the lowest evaluation among the ranks of the team works. The average evaluation rank of the skill levels of the work team included in the team information shown in Fig. 10 specifically represents an average value of ranks of a plurality of team skill levels determined for the team works respectively and stored as a history in the team information database 16.

The information of the necessary skill information of the work team includes, in the specific example shown in Fig. 10, information about languages, information about the number of cancelations, and information about the number of emergency stops.

The information about the languages includes the number of languages (e.g., Japanese, English, and other languages) available for the work team and the name of each of the languages. The information about the languages available for the work team serves as an index for evaluating the communication skill.

The information about the number of cancelations includes the number of cancelations made by the work team without any notification. The information about the number of cancelations serves as an index for evaluating the level of the morality.

The information about the number of emergency stops includes the number of the emergency stops made in response to a preliminarily forbidden action executed by the work team in the team work. The information about the number of the emergency stops serves as an index for evaluating the level of safety consciousness.

The information about the characteristics of the work team includes promoting contents to promote the work team to the orderer.

The forbidding part 14 shown in Fig. 1 forbids the work team from executing the remote manipulation by the master device 30 when the skill level is lower than the reference level. In the embodiment, the rank of the skill level of the work team is determined whether to be equal to or lower than the reference level. For instance, the reference level is set to rank C. In the example shown in Fig. 10, the skill level of the work team is defined as "A". Therefore, the work team is permitted to execute the remote manipulation by using the master device 30 for the team work. Specifically, the work team can obtain a remuneration for the team work by actually and remotely manipulating a plurality of construction machines 50.

The orderer terminal 20 includes a computer such as a personal computer owned by the orderer who places an order for a team work to a work team. The orderer is a person who makes a team work schedule for an operation or a work, and places an order for the operation or work to the work team. The orderer is, for example, a worker belonging to an operation order placement company. The work team may be an operation order receiving company, or an employee employed by the operation order receiving company.

The orderer terminal 20 includes a display part 201, a control part 202, a manipulation part 203, a communication part 204, and an unillustrated memory.

The display part 201 includes, for example, a display, such as a liquid crystal display. The control part 202 includes, for example, a processor such as a CPU, and controls the entirety of the orderer terminal 20. In the embodiment, when receiving from the orderer an input of instruction for a query request to confirm a skill level of a specific work team, the control part 202 sends the query request including a relevant work team ID of the work team to the server 10 via the communication part 204.

The manipulation part 203 includes, for example, a keyboard and a mouse, and receives the input of instruction for the query request to confirm the skill level. The communication part 204 includes a communicator which connects the orderer terminal 20 and the communication channel NT1 to each other, and transmits the query request received by the manipulation part 203 to the server 10 via the communication channel NT1.

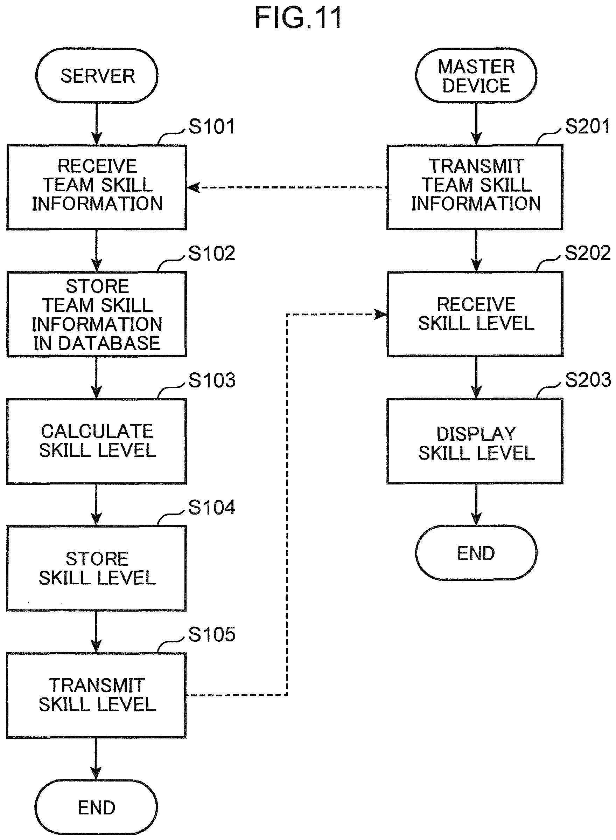

Fig. 11 shows a flowchart of a process of calculating a skill level in the skill information presentation system according to the embodiment.

When the master device control part 301 of the master device 30 detects a finish of a team work of a specific work team, the communication part 305 transmits team skill information about the team work to the server 10 (step S201 in Fig. 11).

The communication part 204 of the server 10 receives the team skill information (step S101). The database management part 15 of the server 10 causes the manipulation skill information database 17 to store the manipulation skill information and causes the necessary skill information database 18 to store the necessary skill information, among the team skill information received by the communication part 204 (step S102).

The skill level calculation part 13 calculates a skill level with reference to the content of the updated database (step S103), and the calculated skill level is stored in the team information database 16 (step S104). The communication part 11 transmits the calculated skill level to the master device 30 (step S105).

The communication part 305 of the master device 30 receives the skill level (step S202). The display part 303 of the master device 30 displays the skill level thereon (step S203). The work team can consequently confirm how much the skill level of the work team increases.

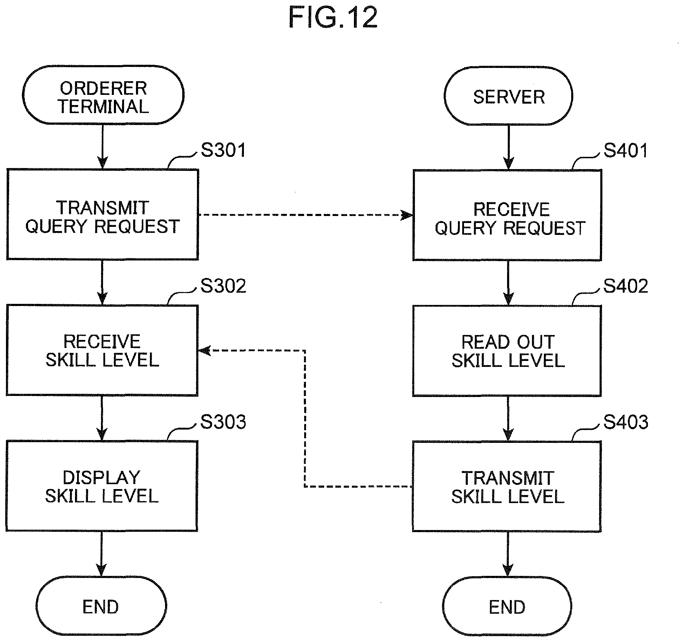

Fig. 12 shows a flowchart of a process of sending a skill level to the orderer terminal in the skill information presentation system according to the embodiment. In the orderer terminal 20, when the manipulation part 203 receives from an orderer an input of instruction for a query request to confirm a skill level of a specific work team, the communication part 204 transmits the query request to the server 10 (step 301). The query request includes a relevant work team ID of the specific work team.

The communication part 11 of the server 10 receives the query request (step S401). The presentation part 12 of the server 10 reads out the skill level of the work team from the team information database 16 (step S402). The communication part 11 of the server 10 transmits the skill level to the orderer terminal 20 (step S403). The communication part 204 of the orderer terminal 20 receives the skill level (step S302). The display part 201 of the orderer terminal 20 displays the skill level thereon (step S303). The orderer can consequently place an order for a team work to the work team attractive to the orderer after confirming the skill level of the work team.

As described above, in the embodiment, team information including a team skill level of a work team having performed a team work using a plurality of construction machines is presented to the orderer terminal 20. The orderer thus can know the team skill level of the work team presented to the orderer terminal 20. This configuration can provide the orderer with information for evaluating a work team candidate.

In the embodiment, the team skill information includes manipulation skill information about a manipulation skill of the work team having remotely manipulated the construction machines 50 by using the master devices 30. The team skill level includes a manipulation skill level representing a level of the manipulation skill which is calculated, based on the manipulation skill information, by the skill level calculation part 13. The orderer thus can know the manipulation skill level of the work team presented to the orderer terminal 20.

In the embodiment, the team skill information further includes necessary skill information about a necessary skill of the work team other than the manipulation skill and necessary for the team work. Further, the team skill level includes a necessary skill level representing a level of the necessary skill which is calculated, based on the necessary skill information, by the skill level calculation part 13. The orderer thus can know the necessary skill level of the work team in addition to the manipulation skill level of the work team. This configuration enables the orderer to grasp a comprehensive team power of the work team including the manipulation skill and the necessary skill and to easily select a work team which meets the needs of the orderer from a plurality of work team candidates.

In the embodiment, the necessary skill information includes actual team work performance information about an actual work performance of the work team and including a work time in which the work team has performed the team work. The work time can be an index representing each of a level of cooperation of the work team in the team work and a level of experience of the work team for the team work. Specifically, the level of the cooperation of the work team in the team work increases as the work time increases. As a result, the level of the experience of the work team for the team work increases. Accordingly, the embodiment enables the orderer to grasp, based on the work time in the actual team work performance information, the level of the cooperation of the work team in the team work and the level of the experience of the work team for the team work.

In the embodiment, the necessary skill information includes information about a management skill required to perform at least one of administration and planning of the team work. The orderer thus can know, based on the level of the management skill presented to the orderer terminal 20, the level of the management skill of the work team.

In the embodiment, the necessary skill information includes information about an interpersonal communication skill required for the operators constituting the work team to cooperate with each other in the team work. The orderer therefore can determine, based on the level of the interpersonal communication skill of the work team presented to the orderer terminal 20, whether the operators of the work team can cooperate with each other in the team work while communicating with each other.

In the embodiment, the team skill information includes personal skill information about a skill of each of the operators constituting the work team having performed the team work. The skill level calculation part 13 calculates, based on the personal skill information, a personal skill level representing a level of the skill of each of the operators. The team information database 16 stores personal information including the personal skill level. The presentation part 12 presents the team information and the personal information to the orderer terminal 20 and the master device 30. Accordingly, the orderer can grasp, based on the personal information, the personal skill of each of the operators constituting the team work in addition to the comprehensive team power of the work team based on the team information. For instance, this configuration allows the orderer to further easily select a work team which meets the needs of the orderer from a plurality of work team candidates.

### Modifications

Meanwhile, the present invention can adopt modifications described below.

(A) Although the necessary skill information includes the information about the management skill, the information about the morality, the information about the actual work performance of the work team, the information about the safety consciousness, and the information about the interpersonal communication skill in the embodiment, the present invention should not be limited thereto. In the present invention, the necessary skill information may include at least one of the information about the management skill, the information about the morality, the information about the actual work performance of the work team, the information about the safety consciousness, and the information about the interpersonal communication skill. Moreover, in the present invention, the necessary skill information may include information other than the information exemplified in the embodiment, or may be constituted by the information other than the information exemplified in the embodiment.

(B) Although the team skill information includes the manipulation skill information and the necessary skill information in the embodiment, the present invention should not be limited thereto. In the present invention, the team skill information may include, for example, either the manipulation skill information or the necessary skill information, or may include skill information except the manipulation skill information and the necessary skill information.

(C) Although the presentation part 12 presents the team information and the personal information to the orderer terminal 20 in the embodiment, the present invention should not be limited thereto. The invention covers an aspect where the presentation part 12 presents only the team information to the orderer terminal 20 without presenting the personal information to the orderer terminal 20.

(D) Although the work team is constituted by the four operators in the embodiment, the present invention should not be limited thereto. In the invention, the work team may be sufficiently constituted by a plurality of operators, and thus the number of members of the work team may be any number other than four. Besides, in the invention, the number of members (operators) to actually perform a specific team work may differ from the number of members or operators constituting the work team entered in the server. In other words, a part of or a whole of the operators constituting the work team may perform the team work, depending on information about a work item or work items of the team work, the number of construction machines, and other information included in operation schedule information sent from the orderer terminal to the server.

(E) Although the team work represents an operation or a work using a plurality of construction machines 50 on a single operation site in the embodiment, the present invention should not be limited thereto. In the invention, the team work may represent an operation or a work using the construction machines on a plurality of operation sites related to each other.

(F) In the present invention, the acquisition part may further acquire at least one of an actual simulation performance concerning a remote manipulation simulation executed by at least one of the operators and an examination result of a predetermined examination for checking that the skill level of the at least one of the operators is equal to or higher than a predetermined level for a specific remote manipulation. Further, the team information may include the acquired actual simulation performance and the acquired examination result. This aspect enables an appropriate evaluation of a skill of such a work team as including an operator having no actual experience of remotely manipulating the construction machine by using the remote manipulating device, or an operator having the experience a few times. Hereinafter, more details will be described.

In the modification, the master device 30 further includes an unillustrated mode switching part. The mode switching part includes, for example, a physical switch or a switch formed of a GUI displayed on the display part 303, and receives, from the operator, a switch instruction of switching among an actual work mode, a simulation mode, and an examination mode. The actual work mode represents a mode for allowing the operator to actually and remotely manipulate the construction machine 50 by using the master device 30 as described in the embodiment. The simulation mode represents a mode for allowing the operator to execute a simulator for training of the remote manipulation. The examination mode represents a mode for executing a predetermined examination for checking that the skill level of the operator is equal to or higher than a predetermined level for a specific remote manipulation.

When the simulation mode is executed, the master device control part 301 activates the simulator constituted by a computer program. Here, the simulator is executed by the operator for the purpose of, for example, improving the skill level for the remote manipulation. The simulator establishes a virtual site environment formed of a three-dimensional model and simulating an actual operation site in a computer apace, and a construction machine model simulating an actual construction machine is arranged in the virtual site environment. The simulator generates an image of the virtual site environment visible from an operating seat of the construction machine model when the operator sits thereon, and causes the display part 303 of the master device 30 to display the generated image. The simulator further changes a posture of each of an attachment, a leading end attachment, and an upper slewing body of the construction machine model in response to a manipulation by the operator to the manipulation part 304 of the master device 30, and further changes the image of the virtual site environment in accordance with the change in the posture. Besides, the simulator puts the work item such as excavation and loading into effect in the virtual site environment in the same manner as on the actual operation site in response to the manipulation by the operator using the manipulation lever. Upon activated, the simulator causes the operator to select a specific specification of the construction machine 50 and a specific work item, and execute the selected work item in the virtual site environment by using the construction machine model having the selected specification, thereby training the operator. After the finish of the training by the simulator, the master device control part 301 sends, to the server 10 via the communication part 305, an actual simulation performance which associates the work item, the work time of the simulator, and the specification of construction machine 50 used in the simulator with one another as a work history. The communication part 11 of the server 10 receives the actual simulation performance. The received actual simulation performance is stored as a part of the team information in the team information database 16.

When the examination mode is executed, the master device control part 301 activates an examination application constituted by a computer program to thereby start an examination. The examination is, for example, a test provided by a provider of the skill information presentation system. For instance, the examination is executable by causing the operator to manipulate an actual construction machine 50 arranged on an actual practicing site by using the master device 30. The operator activates the examination application by, for example, manipulating the master device 30 to input an examination request for executing an examination concerning a desired work item using the construction machine 50 having a desired specification. Thereafter, the examination request is sent to the server 10. The server 10 having received the examination request communicably connects the slave device 40 mounted on the construction machine 50 having the specification desired by the operator on the practicing site and the master device 30 with each other to make the construction machine 50 remotely manipulative by the master device 30, and thereafter starts the examination. For instance, an examiner performs a judgment of the examination via remote or direct visual confirmation of the work actually performed on the practicing site by way of the remote manipulation. After the examiner performs the judgment, a judgment result is sent from the terminal of the examiner to the master device 30. When the communication part 305 receives the judgment result of the examination, the master device control part 301 sends, to the server 10 via the communication part 305, the examination result which associates the received judgment result, the work item, and the specification of the construction machine 50 used in the examination with one another as a work history, and the communication part 11 of the server 10 receives the examination result. The received examination result is stored as a part of the team information in the team information database 16. The presentation part 12 presents the team information including the team skill level, the actual simulation performance, and the examination result to the orderer terminal 20.

Therefore, this aspect allows the orderer to appropriately evaluate, in consideration of the actual simulation performance and the examination result, the skill of such a work team as including an operator having no experience of actually and remotely manipulating the construction machine 50 by using the master device 30, or an operator having the experience a few times.

Here, the presentation part 12 may present the team information to the orderer terminal 20 so that each of the team skill level, the actual simulation performance, and the examination result is individually displayed on the orderer terminal 20. Furthermore, the skill level calculation part may calculate the team skill level, based on the manipulation skill information, the necessary skill information, the actual simulation performance, and the examination result. The presentation part 12 may further present the team information including the team skill level to the orderer terminal 20.

(G) Although the team work represents a construction operation to be executed by the hydraulic excavator in the embodiment, the present invention should not be limited thereto. In the invention, the team work may include, for example, a demolition operation and a forestry operation. The demolition operation covers, for example, a demolition operation to be executed by a nibbler, and a sorting operation to be executed by a grappler. The forestry operation covers, for example, a tree selection operation, a felling operation, and a pruning operation.

### Summary of embodiment

The technical features of the embodiment will be summarized below.

Provided in the embodiment is a skill information presentation system for providing an orderer with information about a skill of a work team constituted by a plurality of operators. The skill information presentation system includes: a server communicably connected to an orderer terminal which allows the orderer to place an order for a team work using a plurality of construction machines, and communicably connected to a plurality of remote manipulating devices for remotely manipulating the construction machines respectively. The server includes: an acquisition part which acquires team skill information about the skill of the work team constituted by the plurality of operators and having performed the team work by using the remote manipulating devices; a skill information database which stores the team skill information; a skill level calculation part which calculates, based on the team skill information, a team skill level representing a level of the skill of the work team having performed the team work; a team information database which stores team information including the team skill level; and a presentation part which presents the team information to the orderer terminal.

In the skill information presentation system, the team information including the team skill level of the work team having performed the team work using the construction machines is presented to the orderer terminal. The orderer thus can know the team skill level of the work team presented to the orderer terminal. This configuration can provide the orderer with information for evaluating a work team candidate.

In the skill information presentation system, the team skill information preferably includes manipulation skill information about a manipulation skill of the work team having remotely manipulated the construction machines by using the remote manipulating devices. The team skill level preferably includes a manipulation skill level representing a level of the manipulation skill which is calculated, based on the manipulation skill information, by the skill level calculation part.

In this aspect, the orderer can know the manipulation skill level of the work team presented to the orderer terminal.

In the skill information presentation system, the team skill information preferably further includes necessary skill information about a necessary skill of the work team other than the manipulation skill and necessary for the team work. The team skill level preferably includes a necessary skill level representing a level of the necessary skill which is calculated, based on the necessary skill information, by the skill level calculation part.

In this aspect, the orderer can know the necessary skill level of the work team in addition to the manipulation skill level of the work team. This configuration enables the orderer to grasp a comprehensive team power of the work team including the manipulation skill and the necessary skill and to easily select a work team which meets the needs of the orderer from a plurality of work team candidates.

In the skill information presentation system, the necessary skill information preferably includes actual team work performance information about an actual work performance of the work team and including a work time in which the work team has performed the team work.

In this respect, the actual team work performance information includes the work time in which the work team has performed the team work. The work time can be an index representing each of a level of cooperation of the work team in the team work and a level of experience of the work team for the team work. Specifically, the level of the cooperation of the work team in the team work increases as the work time increases. As a result, the level of the experience of the work team for the team work increases. Accordingly, the aspect enables the orderer to grasp, based on the work time in the actual team work performance information, the level of the cooperation of the work team in the team work and the level of the experience of the work team for the team work.

In the skill information presentation system, the necessary skill information preferably includes information about a management skill required to perform at least one of administration and planning of the team work.

In this aspect, the orderer can know, based on the level of the management skill presented to the orderer terminal, the level of the management skill of the work team.

In the skill information presentation system, the necessary skill information preferably includes information about an interpersonal communication skill required for the operators constituting the work team to cooperate with each other in the team work.

In this aspect, the orderer can determine, based on the level of the interpersonal communication skill of the work team presented to the orderer terminal, whether the operators of the work team can cooperate with each other in the team work while communicating with each other.

In the skill information presentation system, the team skill information preferably includes personal skill information about a skill of each of the operators constituting the work team having performed the team work. The skill level calculation part preferably calculates, based on the personal skill information, a personal skill level representing a level of the skill of each of the operators. The team information database preferably stores personal information including the personal skill level. The presentation part preferably presents the team information and the personal information to the orderer terminal.

In this aspect, the orderer can grasp, based on the personal information, the personal skill of each of the operators constituting the work team as well as the comprehensive team power of the work team based on the team information. For instance, this configuration allows the orderer to further easily select the work team which meets the needs of the orderer from a plurality of work team candidates.

In the skill information presentation system, the acquisition part preferably further acquires at least one of an actual simulation performance concerning a remote manipulation simulation executed by at least one of the operators, and an examination result of a predetermined examination for checking that the skill level of at least one of the operators is equal to or higher than a predetermined level for a specific remote manipulation. The team information preferably includes the acquired actual simulation performance and the acquired examination result.

This aspect enables an appropriate evaluation of a skill of such a work team as including an operator having no actual experience of remotely manipulating the construction machine by using the remote manipulating device, or an operator having the experience a few times.

A skill information presentation method according to the embodiment is a method for presenting skill information, in a server communicably connected to an orderer terminal which allows an orderer to place an order for a team work using a plurality of construction machines, and communicably connected to a plurality of remote manipulating devices for remotely manipulating the construction machines respectively. The method includes: acquiring team skill information about a skill of a work team constituted by a plurality of operators and having performed the team work by using the remote manipulating devices, calculating, based on the team skill information, a team skill level representing a level of the skill of the work team having performed the team work, storing team information including the team skill level in a team information database included in the server, and presenting the team information to the orderer terminal.

In the method for presenting skill information, the team information including the team skill level of the work team having performed the team work using a plurality of construction machines is presented to the orderer terminal. The orderer thus can know the team skill level of the work team presented to the orderer terminal. This configuration can provide the orderer with information for evaluating a work team candidate.

## Claims

1. A skill information presentation system comprising:
a server communicably connected to an orderer terminal which allows an orderer to place an order for a team work using a plurality of construction machines, and communicably connected to a plurality of remote manipulating devices for remotely manipulating the construction machines respectively, wherein
the server includes:
an acquisition part which acquires team skill information about a skill of a work team constituted by a plurality of operators and having performed the team work by using the remote manipulating devices;
a skill information database which stores the team skill information;
a skill level calculation part which calculates, based on the team skill information, a team skill level representing a level of the skill of the work team having performed the team work;
a team information database which stores team information including the team skill level; and
a presentation part which presents the team information to the orderer terminal.

2. The skill information presentation system according to claim 1, wherein
the team skill information includes manipulation skill information about a manipulation skill of the work team having remotely manipulated the construction machines by using the remote manipulating devices, and
the team skill level includes a manipulation skill level representing a level of the manipulation skill which is calculated, based on the manipulation skill information, by the skill level calculation part.

3. The skill information presentation system according to claim 2, wherein
the team skill information further includes necessary skill information about a necessary skill of the work team other than the manipulation skill and necessary for the team work, and
the team skill level includes a necessary skill level representing a level of the necessary skill which is calculated, based on the necessary skill information, by the skill level calculation part.

4. The skill information presentation system according to claim 3, wherein
the necessary skill information includes actual team work performance information about an actual work performance of the work team and including a work time in which the work team has performed the team work.

5. The skill information presentation system according to claim 3 or 4, wherein
the necessary skill information includes information about a management skill required to perform at least one of administration and planning of the team work.

6. The skill information presentation system according to any one of claims 3 to 5, wherein
the necessary skill information includes information about an interpersonal communication skill required for the operators constituting the work team to cooperate with each other in the team work.

7. The skill information presentation system according to any one of claims 1 to 6, wherein
the team skill information includes personal skill information about a skill of each of the operators constituting the work team having performed the team work,
the skill level calculation part calculates, based on the personal skill information, a personal skill level representing a level of the skill of each of the operators,
the team information database stores personal information including the personal skill level, and
the presentation part presents the team information and the personal information to the orderer terminal.

8. The skill information presentation system according to any one of claims 1 to 7, wherein
the acquisition part further acquires at least one of an actual simulation performance concerning a remote manipulation simulation executed by at least one of the operators, and an examination result of a predetermined examination for checking that the skill level of at least one of the operators is equal to or higher than a predetermined level for a specific remote manipulation, and
the team information includes the acquired actual simulation performance and the acquired examination result.

9. A method for presenting skill information, in a server communicably connected to an orderer terminal which allows an orderer to place an order for a team work using a plurality of construction machines, and communicably connected to a plurality of remote manipulating devices for remotely manipulating the construction machines respectively, the method comprising:
acquiring team skill information about a skill of a work team constituted by a plurality of operators and having performed the team work by using the remote manipulating devices,
calculating, based on the team skill information, a team skill level representing a level of the skill of the work team having performed the team work,
storing team information including the team skill level in a team information database included in the server, and
presenting the team information to the orderer terminal.
